Europäisches Patentamt

European Patent Office

Office européen des brevets

(11) Publication number: **0 063 412**
A1

# (12) EUROPEAN PATENT APPLICATION

(21) Application number: 82301442.8

(22) Date of filing: 19.03.82

(51) Int. Cl.³: **B 01 D 39/10**
B 01 D 37/02

(30) Priority: 16.04.81 US 254834

(43) Date of publication of application:
27.10.82 Bulletin 82/43

(84) Designated Contracting States:
BE DE FR GB IT NL

(71) Applicant: THE DURIRON COMPANY, INC.
P.O. Box 1145 425 North Findlay Street
Dayton Ohio 45401(US)

(72) Inventor: McKale, Gary Willard
68 Manchester Drive
East Aurora New York(US)

(72) Inventor: Clark, Ronald Adelbert
Edens-Evans Center Road
Angola New York(US)

(74) Representative: Warren, Anthony Robert et al,
BARON & WARREN 18 South End Kensington
London W8 5BU(GB)

(54) **Filter leaf.**

(57) A filter leaf is disclosed which is particularly suitable for supporting a layer of a fibrous or particulate filter material such as diatomaceous earth, among others. The leaf comprises a pair of fine mesh filter screens (30) positioned on opposite sides of a system of backing sheets (24) and a drainage screen (20) which are framed by a member (12) to which the fine mesh screens are continuously bonded. The arrangement enables the fine mesh screens (30) to be stretched and tensioned such that the particulate or fibrous material does not migrate and form cracks during filtering.

FIG-2

EP 0 063 412 A1

## FILTER LEAF

The present invention relates generally to a filter leaf and, more particularly, to a filter leaf designed to support a layer of a particulate filter material such as diatomaceous earth without cracking.

A conventional filter leaf is constructed of a pair of fine mesh filter screens positioned on opposite sides of a spacer having the contour of the filter leaf. Between the filter screens a drainage system of coarser mesh screens and/or perforated metal sheets permits flow of the filtrate through the screens and allows it to flow to an outlet aperture in the spacer or leaf center.

In typical industrial filtration operations, a plurality of filter leaves are mounted via their outlets to a collecting pipe in a filtration tank. The liquid to be filtered is introduced through an influent port in the filtration tank under a positive pressure whereby it flows through the filter screens and into the leaves. A porous drainage system in the leaves permits flow of the filtrate to an outlet in the leaf which is connected to a collecting pipe through which the filtrate is conducted from the filtration tank.

In many instances, particulary where the filtrate is intended for human consumption, the outer surfaces of the fine mesh filter screens are coated with a layer of particulate filter material such as but not restricted to diatomaceous earth or fly ash. These particulate filter materials provide a much higher filtration effect and are capable of removing microscopic particles and bacteria.

One problem which has plagued a filter leaf carrying a particulate filter material layer has been a tendency for the layer to migrate during the filtration process. The particulate filter materials on the surface of the filter screen can be somewhat mobile, particularly if during the filtration process, uneven areas of distortion occur in the filter screen and the particulate moves to and accumulates in those areas during the filtration process or there are pressure fluctuations of the fluid coming into the filter. This movement can cause cracks to form in the layer through which the liquid with entrained particulate matter may pass without removal of bacteria and other microscopic impurities. Accordingly, the filter leaf must be constructed so that a high level of flatness is maintained and the screens forming the filter leaf do not distort during the filtration process due to the above factors.

A variety of filter leaf constructions are known, however, for various reasons they have not been suitable, particularly when used in conjunction with a layer of particulate or fibrous filter aid. See for example, U. S. Patents 2,249,063; 2,409,705; 2,902,165; 3,669,267; 3,679,062; and 4,179,378.

Thus, a need exists for a filter leaf which is able to evenly support a layer of a particulate material such that it does not migrate during filtration and form cracks through which impurities may flow.
The afore-mentioned need is satisfied by/the a filter leaf embodying present invention. According to one embodiment of the present invention a filter leaf comprises a frame member having a rectangular or square cross-section with upper and lower outer surfaces and an inside surface which defines and surrounds an inner area, a drainage screen located within the inner area of said frame member and attached to the inside surface thereof, a pair of spaced parallel backing sheets having a plurality of uniformly distributed perforations or openings therethrough also located within said inner areas and positioned on opposite sides of said drainage screen such that the backing sheets do not sit above the upper and lower surfaces of said frame member, a pair of spaced parallel fine mesh surface screens positioned on opposite sides of said backing sheets, said surface screens being continuously bonded respectively to the upper and lower surfaces of said frame member at their peripheries without attachment to the underlying backing sheets or drainage screens, a drainage aperture in said frame member or leaf center, and an outlet fitting which engages said aperture and is attached in a liquid tight manner to said frame member.

With a filter leaf embodying the present invention it is possible to maintain the particulate filter material coated on the outer surface of the fine mesh surface screens integral during the filtering process. This is because the arrangement of filter leaf layers and method of attachment of the fine mesh surface screens produces a high level of flatness in the fine mesh surface screens. Since they are flat and in tension and the particulate filter material remains integral, there is a minimized danger of bacteria, dirt and other impurities infiltrating the interior of the filter leaf.

Accordingly, it is an object of the present invention to provide an improved filter leaf which has fine mesh surface screens with a high level of flatness.

Other objects and advantages of the invention will be apparent from the following description, the accompanying drawing and the appended claims.

To more fully explain the invention reference is made to the accompanying drawing in which:

Fig. 1 is a plan view of a filter leaf embodying the novel features of the invention; and

Fig. 2 is a section through a point on the frame member.

Fig. 3 is a partial view of another embodiment where the center of the leaf is shown with a centrally located drainage outlet.

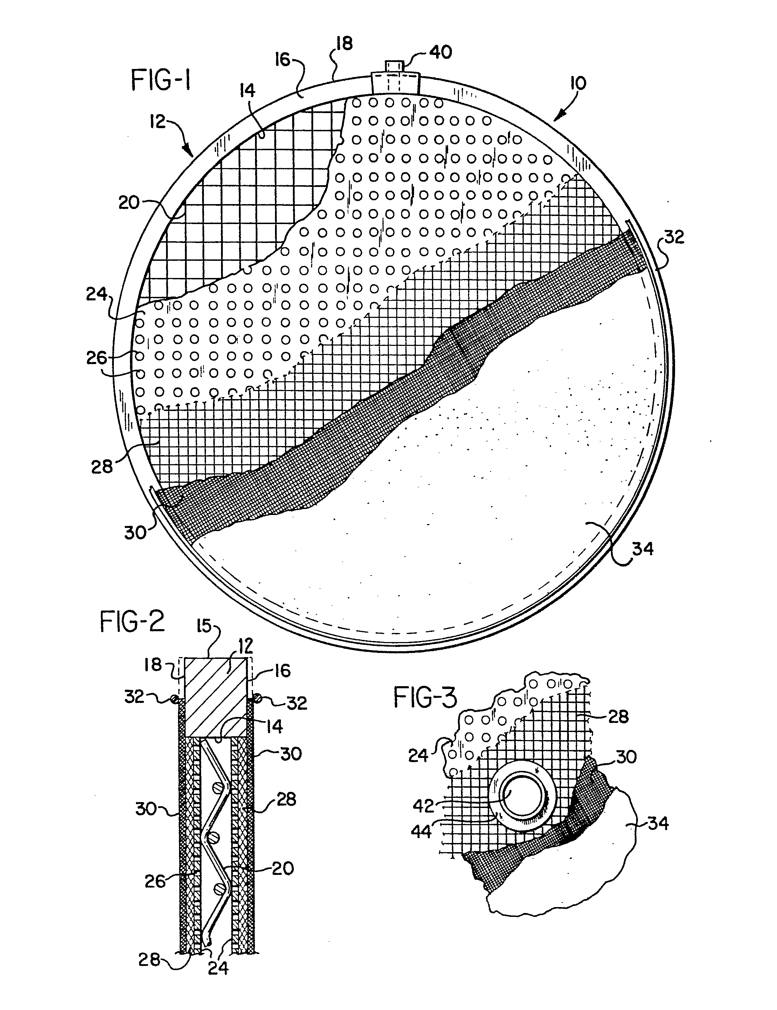

The filter leaf embodying the present invention is generally indicated as 10 in Fig. 1. The filter leaf is constructed on a frame member 12 having an inside diameter surface 14 defining its inner areas, an outside diameter surface 15, and upper and lower surfaces 16 and 18. The filter leaf is shown from one side in plan view with various elements broken away to show the underlying areas. The leaf is symmetrical about drainage screen 20 although only one of each of the paired members mentioned below can be seen in Fig. 1.

Thus drainage screen 20 is located between a pair of backing sheets 24 (one shown in Fig. 1) having perforations or apertures 26 uniformly distributed therethrough. In the embodiment illustrated, the backing sheets are, in turn, positioned inside a pair of intermediate screens 28, which can be seen in Fig. 2. Each of the drainage screen 20, the backing sheets 24 and the intermediate screens 28 are dimensioned such that they fit within the area defined by the inside surface 14 of the frame member 12. Furthermore, the combined thickness of these members is such that it does not exceed the thickness of the frame member 12. Thus, in accordance with this embodiment, these interior members of the filter leaf do not sit above or extend beyond a diametric sight line from one side of the leaf to the other.

The intermediate screen 28 has a coarser mesh than the fine wire screen clothes 30 which define the outer faces of the filter leaf. In this embodiment, the intermediate screens are optional.

In accordance with this embodiment, the surface screens 30 extend beyond the inside surface of the frame member 12 to a point approximately midway between the inside surface and the outer circumferential surface of the frame member. There they are continuously bonded at their peripheries to the upper and lower faces 16 and 18 of the frame member as shown at 32 in Figs. 1 and 2. Thus, in this embodiment, the surface screens 30 are free of any attachment to the intermediate screens 28 or the perforated backing sheets 26.. This provides the important advantages discussed below.

The frame member 12 has formed therein an aperture through which the filtrate flows during the filtration process. This aperture is fitted with an outlet fitting 40 which preferably is arcuate and conforms to the circumference of the frame member. This outlet connects to a collecting pipe in the filtration apparatus and completes the filtration system.

Fig. 3 shows another embodiment of the present invention in which instead of draining the screen by an outlet located in the frame, there is a centrally located drainage outet 42 fitted with a circular outlet fitting 44. Currently this type of screen is often used.

embodying
In use, the filter leaf / the present invention is coated with a particulate filter material such as but not restricted to diatomaceous earth, fly ash, etc., as shown by 34 in Fig. 1. Those skilled in the art will note, however, that in practice, the filter leaf may not be supplied with the particulate material 34 thereon, but the filter leaf can be coated with the particulate material in situ in the filtration tank prior to initiating the filtration process. One practice that is often used is to coat the filter leaf 10 with the particulate filter material in the filter tank by circulating a suspension of the particulate filter material through the tank prior to the filtration process. This can be performed in several steps. Upon circulating the suspension of the filter particulate, it collects on the fine mesh screen 30 to yield a layer of material through which the liquid to be filtered must also pass during the filtration process.

The filter leaf / the present invention is
                    embodying
generally assembled by first tack welding the drainage screen to the inside surface of the frame member. After the drainage screen is in place, the backing sheet can be affixed to the drainage screen, for example, by spot welding, plug welding, riveting, etc. Welds may be placed between the backing sheet and the drainage screen at points equally spaced around concentric circles evenly spaced within the filter leaf. In a similar fashion, when the filter leaf includes an intermediate filter screen, spot welds, etc., can be placed between the backing sheet and the intermediate screen using a similar pattern to produce a weld-on-weld arrangement.

                    this embodiment of
In accordance with/the present invention, the fine mesh wire cloth used as the surface screen is continuously bonded to the upper and lower faces of the frame member such that no attachments exist between this fine mesh screen and the underlying intermediate screen and backing sheet. This is illustrated in Fig. 2 where like parts are numbered as in Fig. 1. This freedom from attachments to the underlying screen makes it possible to form a filter leaf having the high degree of flatness and tension required when using particulate filter layers. Because the outer screen is not attached to the underlying screens, it is possible by cold working the outer frame rim to stretch and flatten the surface screen on the surface of the drainage members. This makes the surface screens exceptionally flat and tensioned which prevents the

particulate material from migrating during filtration
and cracks from forming.

The continuous bond formed between the surface
screens and the frame member can be formed using
several metal bonding techniques. In particular, the
continuous bond can be formed by brazing, soldering, arc
welding, resistance welding, electron beam welding and
laser beam welding. The bond is formed in such a manner
that a fluid tight seal results between the surface
screen and the frame member since if leaks are possible
between the surface screen and the frame member, the
liquid to be filtered may pass around the screen without
filtration and into the filtrate. Each of the afore-
mentioned techniques is capable of producing the necessary
fluid tight seal when properly performed.

The filter leaf assembly is preferably made of
stainless steel, but other metals and alloys such as
carbon steel as well as plastic materials and combinations
thereof can be used. The dimensions of the frame member
are not particularly critical, however, a stainless steel
bar having a width of about 0.95 or 1.27 cm ($\frac{3}{8}$ or $\frac{1}{2}$ inch)
and a depth of about 1.27 or 1.91 cm ($\frac{1}{2}$ or $\frac{3}{4}$ inch) is
suitable for most purposes and particularly for leaves
ranging up to 1.52 m (60 inches) in outside diameter.
In the case of circular filter leaves such as illustrated
in the Figure, the outside diameter of the leaf will depend
on the size of the filtration apparatus. For example, in
the case of a filter having a diameter of 1.52 m (60 inches),
a filter leaf 1.22 m (48 inches) in outside diameter is
normally but not always used. Similarly, where the filter
tank is 1.83 m (72 inches) in diameter, the filter leaf
outside diameter is generally but not always 1.52 m (60 inches).

The drainage screen may take various forms but is preferably made from a 1X1 mesh stainless steel wire preferably
with a wire gauge of about 0.31 to 0.49 cm (0.120 to 0.193 inch). The Figure illustrates a square grid configuration, but those skilled in the art will recognize other configurations that may be used. In one working embodiment, the drainage screen is a grid 2.54 cm (1 inch) on a side.

The backing sheet is typically a perforated stainless steel disc. The stainless steel is for example 20 gauge having openings over 50% of its area. In general, the open area can range from 20 to 70%. The openings may be formed by a variety of processes including punching, drilling, etching, etc.

As indicated earlier, the intermediate screens illustrated in the Figure are optional. The intermediate screens have a coarser mesh than the surface screens. In general, they can range from 8 to 40 mesh. A16X 16 mesh screen is generally suitable.

The surface screen is preferably a fine mesh stainless steel micro cloth. This cloth can have openings as large as 250 microns in diameter. The screen must be sufficiently porous to limit pressure drop but not too porous to support the particulate filter material. Typical openings range from 30 to 250 microns in diameter. A preferred opening is 60 microns in diameter.

While the invention has been described in detail and by reference to a specific embodiment thereof, it will be apparent to those skilled in the art that numerous variations and modifications are possible without departing from the scope of the invention as defined in the appended claims:

CLAIMS

1. A filter leaf (10) comprising:

a frame member (12) having a rectangular or square cross section, upper and lower outer surfaces, an outside diameter surface (15) and an inner diameter surface (14) enclosing an inner area;

a drainage screen (20) located within said inner area and attached to the inside diameter surface of said frame member (12),

a pair of backing sheets (24) having a plurality of uniformly distributed openings (26) therethrough positioned on opposite sides of said drainage screen (20) and within said inner area such that said backing sheets (24) do not extend beyond the upper and lower surfaces (16 and 18) of said frame member,

a pair of fine mesh surface screens (30) positioned on opposite sides of said backing sheets (24) the peripheries of said screens extending beyond said inner area and being continously bonded to the the outer surfaces (16 and 18) of said frame member respectively,

a outlet aperture (42) in said frame member (12), and

an outlet fitting (44) which engages said aperture and said frame member.

2. A filter leaf as claimed in claim 1,which additionally comprises a pair of wire intermediate screens (28) having a mesh coarser than said surface screens (30), said intermediate screens (28) being positioned between each of said backing sheets (24) and said surface sheets (30) and laying completely within said inner area.

3.   A filter leaf as claimed in claims 1 or 2, wherein said leaf (10) is stainless steel.

4.   A filter leaf as claimed in claim 1, 2 or 3, wherein said filter leaf (10) is circular.

5.   A filter leaf as claimed in any of claims 1 to 4, wherein each said surface screen (30) possesses openings 30 to 250 microns in diameter.

6.   A filter leaf as claimed in claim 2, or any of claims 3 to 5 in combination with claim 2, wherein each said intermediate screen (28) is approximately 8 to 40 mesh and is attached to an associated one of said backing screens.

7.   A filter leaf as claimed in any preceding claim, wherein each said backing sheet (24) is attached to an associated one of said drainage screens.

8.   A filter leaf as claimed in any preceding claim, wherein each said surface screen (30) is bonded solely to the outside surface (16 or 18) of said frame member (12).

9.   A filter leaf as claimed in claim 8, wherein each said surface screen (30) is cold worked such that it is tensioned and stretched flat on said frame member (12).

0063412

1 / 1

FIG-1

FIG-2

FIG-3

## 0063412

European Patent
Office

**EUROPEAN SEARCH REPORT**

Application number

EP 82 30 1442.8

| Category | Citation of document with indication, where appropriate, of relevant passages | Relevant to claim | CLASSIFICATION OF THE APPLICATION (Int. Cl. 3) |
|----------|----------------------------------------------------------|-------|------------------------------------|
| | **DOCUMENTS CONSIDERED TO BE RELEVANT** | | |
| A | US - A - 2 061 850 (E. ROBERTS) <br> * fig. 2, 3 * <br> -- | 1,2 | B 01 D 39/10 <br> B 01 D 37/02 |
| A | DE - C - 133 185 (T. SEITZ) <br> * claim; fig. 3, 6 * <br> -- | 1,3,4 | |
| A | DE - A - 1 800 912 (SEITZ-WERKE) <br> * claims 1, 4; fig. 2 * <br> -- | 1,4 | **TECHNICAL FIELDS SEARCHED (Int.Cl. 3)** |
| A | DE - A - 1 905 818 (L.& C. STEINMÜLLER) <br> * page 1, paragraph 2; fig. 2 * <br> -- | 1,3,9 | |
| A | DE - A1 - 2 908 625 (ECODYNE CORP.) <br> * page 6, paragraph 2 * <br> -- | 5 | B 01 D 37/02 <br> B 01 D 39/10 <br> B 01 D 39/12 |
| D,A | US - A - 2 249 063 (H.A. SWEM) <br> * fig. 2 * <br> ---- | 1,2 | |

The present search report has been drawn up for all claims

| Place of search | Date of completion of the search | Examiner |
|-----------------|----------------------------------|----------|
| Berlin | 28-05-1982 | KÜHN |

EPO Form 1503.1 06.78